# EUROPÄISCHE PATENTSCHRIFT

(11) **EP 0 664 895 B1**
(45) Veröffentlichungstag und Bekanntmachung des Hinweises auf die Patenterteilung: **14.05.1997**
(21) Anmeldenummer: 93919324.9
(22) Anmeldetag: 13.09.1993
(51) Int. Cl.: G02F 1/01, G02B 6/12

(54) **NICHTLINEAR-OPTISCHER SCHICHTAUFBAU**
NON-LINEAR OPTICAL LAYER STRUCTURE
STRUCTURE DE COUCHE OPTIQUE NON LINEAIRE

(30) Priorität: 21.09.1992 DE 4231492
(43) Veröffentlichungstag der Anmeldung: 02.08.1995
(73) Patentinhaber: BASF Aktiengesellschaft, 67063 Ludwigshafen (DE)
(72) Erfinder: HARTH, Klaus, D-6719 Altleiningen (DE); SCHROF, Wolfgang, D-6719 Neuleiningen (DE); ESSER, Anton, D-6730 Neustadt (DE); FISCH, Herbert, D-6706 Wachenheim (DE); PAUST, Joachim, D-6708 Neuhofen (DE); HIBST, Hartmut, D-6905 Schriesheim (DE); HAAS, Karl-Heinz, Tsukuba-shi, Ibaraki 305 (JP); TICKTIN, Anton, Dr., D-68199 Mannheim (DE)
(86) Internationale Anmeldenummer: EP9302466
(87) Internationale Veröffentlichungsnummer: WO9407176

(56) Entgegenhaltungen:
- EP-A- 0 213 938
- NL-A- 8 701 119
- US-A- 5 026 135
- US-A- 5 049 762
- US-A- 5 133 037
- PATENT ABSTRACTS OF JAPAN vol. 013, no. 370 (P-920) & JP,A,01 128 037 (NEC) 19. Mai 1989

## Beschreibung

Konjugierte Polymere, d. h. Kohlenwasserstoff-Polymere mit entlang der Kette angeordneten konjugierten Doppelbindungen, besitzen aufgrund der guten Beweglichkeit und der leichten Polarisierbarkeit ihrer delokalisierten π-Elektronen eine Reihe interessanter anwendungstechnischer Eigenschaften. So zeigen verschiedene Systeme, insbesondere bei Zusatz von Elektronen-Donatoren oder -Akzeptoren, eine sehr hohe elektrische Leitfähigkeit (vgl. H. J. Mair und S. Roth, Elektrisch leitende Kunststoffe, Carl Hanser Verlag, München, Wien).

Ebenso ist bekannt, daß konjugierte organische Materialien hohe nichtlinearoptische (NLO) Effekte zeigen (vgl. D. R. Ulrich, Polymers for Nonlinear Optical Applications, Mol. Cryst. Liq. Cryst, 1990, vol 189, pp. 3 - 38). Die Größe des NLO-Effektes steigt dabei in der Regel mit der Anzahl der Doppelbindungen pro Molekül. Polymere mit ausgedehnten konjugierten π-Elektronensystemen sind daher Kandidaten für den Einsatz in optoelektronischen oder rein optischen Bauelementen, beispielsweise zur Verwendung in der Informatik. Neben einem möglichst großen NLO-Effekt sollten die entsprechenden Materialien eine schnelle Relaxation (d.h. minimale Schaltzeit) und geringe Verluste durch Absorption oder Streuung aufweisen. Darüber hinaus sollte die gute Verarbeitbarkeit der Materialien, z.B. in Form dünner Schichten, sichergestellt sein. Eine Materialklasse, die diesen Anforderungen genügt, sind konjugierte Polyene, insbesondere konjugierte Polyene mit carotinoider Struktur.

Ein entscheidender Nachteil vieler organischer Materialien mit konjugierten Doppelbindungen ist ihre chemische Instabilität bei Lagerung an Luft, wodurch die praktische Verwendbarkeit dieser Materialklassen stark eingeschränkt wird. Die Instabilität konjugierter Polymere steigt in vielen Fällen mit der Anzahl der Doppelbindungen pro Molekül. Dies gilt insbesondere für Polyene mit carotinoider Struktur.

Aufgabe der vorliegenden Erfindung war es daher, die Stabilität von konjugierten Polyenen zu verbessern und damit ihre praktische Anwendbarkeit, insbesondere deren Einsatz in rein optischen oder optoelektronischen Bauelementen, zu verbessern.

Es wurde gefunden, daß die Stabilität konjugierter Polymere wesentlich gesteigert werden kann, wenn das konjugierte Polymer in einen Verbund aus einem mehr oder minder flächenhaften oder dreidimensionalen Trager und einer dünnen diffusionssperrenden Beschichtung eingebracht wird. Die Schichten der vorliegenden Erfindung sind im Anspruch 1 definiert. Ein Verfahren zu deren Herstellung ist im Anspruch 6 definiert. Geeignet als diffusionssperrende Beschichtung sind die Nitride, Oxide, Carbide, Oxidnitride, Carbidnitride, Carbidoxide oder Carbidoxidnitride von Metallen oder Nichtmetallen. Bevorzugt sind sauerstofffreie Beschichtungen; besonders bevorzugt sind Nitride der Elemente Si und Al. Ähnliche Schichten sind aus US-A-5 026 135 und JP-A-1 128 037 bekannt. Weiterhin kann die diffusionssperrende Beschichtung aus einem chemischen Netzwerk der Elemente C, Si, Al, O, N und H bestehen. Die diffusionssperrende Beschichtung kann eine amorphe oder eine feinkristalline Mikrostruktur besitzen. Grobkristalline Schichten sind aufgrund ihrer geringen Sperrwirkung an den Korngrenzen in der Regel nicht geeignet.

Für NLO-Anwendungen sollte die diffusionssperrende Beschichtung eine hohe Transmission (Durchlässigkeit) für Strahlung im sichtbaren und infraroten Spektralbereich aufweisen. Damit soll die zusätzliche Absorption eines Lichtstrahls in einem rein optischen oder optoelektronischen Bauelement unterbunden werden. Besonders geeignet für optische Anwendungen sind daher Diffusionssperrschichten mit einer optischen Durchlässigkeit von über 50, bevorzugt über 90 %. Sofern die Diffusionssperrschichten eine feinkristalline Mikrostruktur besitzen, sollte die Korngröße deutlich kleiner sein als die Wellenlänge der erwarteten Strahlung, um zusätzliche Streuverluste zu vermeiden.

Die Schichtdicke der diffusionssperrenden Beschichtung kann zwischen 5 und 10.000 nm, bevorzugt im Bereich zwischen 20 und 200 nm liegen. Es ist denkbar, die Dicke der Schicht an spezielle optische Anforderungen des Gesamtverbundes anzupassen. Die Wahl einer geeigneten Schichtdicke kann dabei entsprechend den an sich bekannten Gesetzmäßigkeiten für die optischen Eigenschaften dünner Schichten erfolgen (vgl. O.S. Heavens; "Optical Properties of Thin Solid Films", Butterworths Scientific Publications, London, 1955). Wird der Gesamtverbund beispielsweise bei einer optischen Anwendung von der Seite der Diffusionssperrschicht her bestrahlt, so ist es möglich, die Reflexionsverluste dieses Strahls an den Grenzflächen Umgebungsmedium/Diffusicnssperrschicht bzw. Diffusionssperrschicht/Polymerschicht durch eine spezielle Wahl der Dicke der Diffusionssperrschicht zu minimieren.

Für die Herstellung der erfindungsgemäßen Diffusionssperrschicht sind die Methoden der PVD (Physical Vapor Deposition) und CVD (Chemical Vapor Deoposition) geeignet. Mögliche PVD-Verfahren sind das Aufdampfen, die Kathodenzerstäubung sowie die anodische oder kathodische Lichtbogenbeschichtung (vgl. R. F. Bhunshah et al, "Deposition Technologies for Films and Coatings", Noyes Publications, 1982). Ein mögliches CVD-Verfahren ist die plasmaunterstützte Gasphasenabscheidung (vgl. H. Yasuda, "Plasma Polymerization", Academic Press, 1985). Bevorzugt sind plasmaunterstützte Verfahren wie Kathodenzerstäubung oder plasmaunterstützte Gasphasenabscheidung; besonders bevorzugt ist die Kathodenzerstäubung.

Bei der Kathodenzerstäubung werden die zur Beschichtung vorgesehenen Materialien in fester Form als sog. Target auf die Kathode eines Plasmasystems aufgebracht, unter vermindertem Druck, vorzugsweise in einem Druckbereich von 5 x 10⁻⁴ bis 5 x 10⁻² mbar, in einer Prozeßatmosphäre zerstäubt und auf dem Träger abgeschieden. Üblicherweise enthält das Prozeßgas ein Edelgas wie Argon. Zur Herstellung der erfindungsgemäßen Schichten sind verschiedene methodische Varianten der Kathodenzerstäubung, wie Magnetron-Sputtern, DC- bzw. RF-Sputtern, Bias-Sputtern oder reaktives Sputtern sowie deren Kombinationen geeignet. Beim Magnetron-Sputtern befindet sich das zu zerstäubende Target in einem äußeren Magnetfeld, welches das Plasma in den Bereich des Targets konzentriert und damit eine Erhöhung der Zerstäubungsrate sowie eine Reduktion der Temperaturbelastung des Substrats bewirkt. Beim DC- bzw. RF-Sputtern erfolgt die Anregung des Zerstäubungsplasmas in an sich bekannter Weise durch DC- bzw. RF-Generatoren. Beim Bias-Sputtern wird der zu beschichtende Formkörper mit einer in der Regel negativen Vorspannung (Bias) belegt, welche während der Beschichtungen zu einem intensiven Beschuß des Formkörpers mit Ionen führt. Um bei der Herstellung der Diffusionssperrschicht eine Degradation der konjugierten Polymerschicht zu verhindern, sollte die Temperaturentwicklung auf dem Substrat möglichst gering sein. Für die Herstellung der Schichten ist daher das DC-Magnetron-Sputtern besonders geeignet.

Für die Herstellung der erfindungsgemäßen Schichten ist die reaktive Kathodenzerstäubung besonders bevorzugt. Bei der reaktiven Kathodenzerstäubung werden dem Prozeßgas weitere reaktive Gase wie Sauerstoff, Stickstoff, Wasserstoff oder Kohlenwasserstoffe in der gewünschten Menge zu einem geeigneten Zeitpunkt zugemischt. Bei der Zerstäubung eines geeigneten Targets werden die betreffenden Oxid-, Nitrid-, Carbid-, Oxidnitrid-, Carbidnitrid-, Carbidoxid- oder Carbidoxidnitridschichten abgeschieden. Das eingesetzte Target kann dabei entweder aus einem reinen Metall (z.B. Al) oder einem reinen Nichtmetall (z.B. Si) oder aus einem Oxid, Nitrid oder Carbid solcher Metalle bzw. Nichtmetalle bestehen. Zur Herstellung der erfindungsgemäßen Diffusionssperrschichten ist die reaktive Kathodenzerstäubung eines Si- oder Al-Targets besonders geeignet.

Die gewünschte Schichtdicke, die chemische Zusammensetzung und die Mikrostruktur der Diffusionssperrschicht wird im wesentlichen durch die Beschichtungsparameter Prozeßgasdruck, Prozeßgaszusammensetzung, Zerstäubungsleistung, Sputtermodus und Substrattemperatur festgelegt.

Mit den genannten Abscheideverfahren ist es auch möglich, dünne sog. Gradientenschichten herzustellen, deren Zusammensetzung mit zunehmender Schichttiefe in definierter Weise variiert. Die Variation der Zusammensetzung kann dabei in einfacher Weise durch die Beschichtungsparameter gesteuert werden. Darüber hinaus sind auch Schichtsysteme aus mehreren Nitrid-, Oxid- oder Carbidschichten (bzw. deren Kombinationen) evtl. unter Einschluß dünner metallischer Schichten als Diffusionssperrschicht denkbar.

Die konjugierte Polymerschicht des erfindungsgemäßen Verbundes kann Polyene wie z.B. Polyacetylen oder Polyheterozyklen wie z.B. Polythiophen oder Polypyrrol enthalten. Bevorzugt enthält die Schicht ein Polyen mit carotinoider Struktur wie z.B. Astaxanthin. Besonders bevorzugt enthält die organische Schicht ein Polyen mit carotinoider Struktur und einer hohen Anzahl konjugierter Doppelbindungen, wie z.B. C₆₀-Astaxanthin.

Die konjugierte Polymerschicht kann weiterhin gewöhnliche transparente organische Polymere enthalten, in deren Matrix das konjugierte Polymer eingelagert wird. Die Matrix gewährleistet eine gute Verarbeitbarkeit und eine höhere mechanische Beanspruchung sowie eine zusätzliche chemische Stabilisierung des eingelagerten konjugierten Polymers. Als Matrixmaterial kommen transparente Polymere mit guten Filmbildungseigenschaften in Frage, wie Polystyrol, Polyvinylacetat, Polyacrylate, nichtkristalline Polyurethane, Mischpolyamide, vorzugsweise jedoch Polymethylmethacrylat oder Polyvinylpyrrolidon. Der Gehalt der organischen Schicht an konjugierten Polymeren kann im Bereich zwischen 10 und 100 % liegen.

Für die Herstellung der organischen Schicht können die bekannten Methoden zur Herstellung dünner Polymerschichten wie Spin-Coating, Pressen, Rakeln, Gießen, Extrusion oder Elektropolymerisation verwendet werden. Die Dicke der organischen Schicht kann im Bereich zwischen 10 und 10.000 nm liegen.

Zur Verbesserung der Haftfestigkeit des Gesamtverbundes ist es denkbar, den Träger vor dem Aufbringen der Polymerschicht bzw. die Polymerschicht vor dem Aufbringen der Diffusionssperrschicht einer Vorbehandlung zu unterziehen. Geeignete Vorbehandlungen sind thermische Behandlungen oder chemische bzw. physikalische Ätzbehandlungen.

Der erfindungsgemäße Schichtaufbau kann Verwendung finden als
- rein optisch schaltendes Bauelement
- optoelektronisches Bauelement
- elektrisch leitfähiges Polymerbauteil.

Der besondere Vorteil des erfindungsgemäßen Verbundes liegt in seinen guten nichtlinear-optischen Eigenschaften, seiner geringen Relaxationszeit, seinen geringen optischen Verlusten durch Absorption und Streuung, seiner guten Verarbeitbarkeit und - insbesondere - seiner Langzeitstabilität.

### Beispiel

In 5 g CHCl₃ werden 60 mg C₆₀-Astaxanthin bei 25°C innerhalb von 30 min unter Rühren gelöst. 10 Tropfen dieser Lösung werden innerhalb von 15 s auf ein mit 5.000 [min-1] rotierendes Glasplättchen getropft. Anschließend wird noch 15 s abgeschleudert. Das Glasplättchen wird dann i.V. bei 25°C getrocknet.

Das beschichtete Glasplättchen wird in eine handelsübliche Kathodenzerstäubungsanlage (Alcatel SCM 601) eingesetzt. Parallel zu dem Glasplättchen wird in einem Abstand von 60 mm ein rundes Si-Target mit einem Durchmesser von 150 mm befestigt. Die Anlage wird mit einem zweistufigen Pumpsystem auf einen Druck von 10⁻⁶ mbar evakuiert. Danach wird ein Ar/N₂-Gemisch im Flußverhältnis 1 : 1 eingelassen, so daß sich ein Druck von 5 x 10⁻³ mbar einstellt. Durch Anlegen einer RF-Spannung an das Si-Target (Zerstäubungsleistung 400 W) wird eine transparente (Si-N)-Schicht der Dicke 60 nm abgeschieden.

Eine Vergleichsprobe wird ohne zusätzliche (Si-N)-Beschichtung belassen. Beide Proben werden in dunkler Laborumgebung (20°C, 40 % r.F.) gelagert. In regelmäßigen Zeitabständen wird ihr Absorptionsspektrum aufgenommen. Die Tabelle zeigt die relative Absorption der beiden Schichten bei einer Wellenlänge von 515 nm (Maximum der C₆₀-Astaxanthin-Absorption).

Wie man sieht, verandern sich mit (Si-N)-beschichtete Proben im Beobachtungszeitraum nicht. Die Astaxanthinschicht bleibt somit unverändert. Dagegen weist das Verhalten der Vergleichsprobe auf eine Zerstörung der Astaxanthinschicht innerhalb weniger Tage hin.

**Tabelle:**

| Relative Absorption von C₆₀-Astaxanthin-Schichten | | |
|---|---|---|
| Zeit [Tage] | (SI-N)-beschichtet | Vergleichsprobe |
| 0 | 100 | 100 |
| 1 | 99 | 100 |
| 3 | 100 | 88 |
| 7 | 99 | 39 |
| 10 | 97 | 12 |
| 14 | 100 | 8 |
| 24 | 100 | 6 |
| 40 | 100 | 2 |

## Patentansprüche

1. Nichtlinear-optischer Schichtaufbau mit einer Schicht aus organischem nichtlinear-optischem Material (NLO), wobei diese Schicht wenigstens einseitig eine gegen Luftsauerstoff diffusionssperrende Beschichtung aufweist, dadurch gekennzeichnet, daß diese Beschichtung aus mindestens einem Nitrid oder Carbid eines Metalls oder Nichtmetalls besteht.

2. Schichtaufbau nach Anspruch 1, dadurch gekennzeichnet, daß die diffusionssperrende Beschichtung eine hohe optische Transmission im sichtbaren und infraroten Spektralbereich aufweist.

3. Schichtaufbau nach Anspruch 1, dadurch gekennzeichnet, daß die diffusionssperrende Beschichtung eine Stärke zwischen 5 und 10.000 nm aufweist.

4. Schichtaufbau nach Anspruch 1, dadurch gekennzeichnet, daß die Beschichtung aus einem Nitrid von Silicium oder Aluminium besteht.

5. Schichtaufbau nach einem der Ansprüche 1 bis 4, dadurch gekennzeichnet, daß die NLO-Schicht aus einem konjugierten Polyen besteht.

6. Verfahren zur Herstellung einer gegen den Angriff von Luftsauerstoff geschützten Schicht aus nichtlinear-optischem Material (NLO), die wenigstens einseitig eine gegen Luftsauerstoff diffusionssperrende Beschichtung aus mindestens einem Nitrid oder Carbid eines Metalls oder Nichtmetalls aufweist, dadurch gekennzeichnet, daß man die Beschichtung mittels Physical Vapor Deposition PVD oder Chemical Vapor Deposition CVD erzeugt.

## Claims

1. A nonlinear optical layer structure having a film of an organic nonlinear optical material (NLO), this film having, on at least one side, a coating which prevents diffusion of atmospheric oxygen, wherein this coating consists of at least one nitride or carbide of a metal or of a nonmetal.

2. A layer structure as claimed in claim 1, wherein the antidiffusion coating has high optical transmittance in the visible and infrared spectral range.

3. A layer structure as claimed in claim 1, wherein the antidiffusion coating has a thickness of from 5 to 10,000 nm.

4. A layer structure as claimed in claim 1, wherein the coating consists of a nitride of silicon or aluminum.

5. A layer structure as claimed in any of claims 1 to 4, wherein the NLO film consists of a conjugated polyene.

6. A process for the production of a film of a nonlinear optical material (NLO), protected from attack by atmospheric oxygen and having, on at least one side, a coating which prevents diffusion of atmospheric oxygen and comprises at least one nitride or carbide of a metal or of a nonmetal, wherein the coating is produced by means of physical vapor deposition PVD or chemical vapor deposition CVD.

## Revendications

1. Structure de couche optique non linéaire avec une couche constituée d'un matériau organique optique non linéaire (NLO), cette couche présentant, au moins sur une face, un revêtement empêchant la diffusion de l'oxygène de l'air, caractérisée en ce que ce revêtement est constitué d'au moins un nitrure ou carbure d'un métal ou d'un non-métal.

2. Structure de couche selon la revendication 1, caractérisée en ce que le revêtement empêchant la diffusion présente une transmission optique élevée dans le domaine spectral visible et infrarouge.

3. Structure de couche selon la revendication 1, caractérisée en ce que le revêtement empêchant la diffusion présente une épaisseur entre 5 et 10.000 nm.

4. Structure de couche selon la revendication 1, caractérisée en ce que le revêtement est constitué d'un nitrure de silicium ou d'aluminium.

5. Structure de couche selon l'une des revendications 1 à 4, caractérisée en ce que la couche NLO est constituée d'un polyène conjugué.

6. Procédé de fabrication d'une couche constituée d'un matériau optique non linéaire (NLO), protégée contre l'attaque de l'oxygène de l'air, qui présente, au moins sur une face, un revêtement empêchant la diffusion de l'oxygène de l'air, constitué d'au moins un nitrure ou carbure d'un métal ou d'un non-métal, caractérisé en ce qu'on produit le revêtement par dépôt physique en phase gazeuse (Physical Vapor Deposition, PVD) ou par dépôt chimique en phase gazeuse (Chemical Vapor Deposition, CVD).
